# EUROPEAN PATENT APPLICATION

(11) **EP 2 128 013 A1**
(43) Date of publication of application: **02.12.2009**
(21) Application number: 08251831.7
(22) Date of filing: 27.05.2008
(51) Int. Cl.: B62K 25/28, B62K 19/38

(54) **Rear fork**

(71) Applicant: MERIDA INDUSTRY CO., LTD., Meikang Village, Tatsun Hsiang, Changhua Hsien (TW)
(72) Inventor: Falke, Jürgen, 71634 Ludwigsburg (DE)
(74) Representative: Jennings, Nigel Robin

(57) **Abstract**

A rear fork (11) for a rear suspension bicycle having a ground link, the rear fork (11) has input links (121), a shock absorber (50), coupler links (112), follower links (113), a brake mount (20) and a connecting shaft (30). The input links (121) are mounted on the ground link and are connected to the shock absorber (50). The coupler links (112) are connected to the input links (121) and terminate in dropouts (111) being rotatably mounted thereon. The follower links (113) are mounted rotatably on the dropouts (111) and pivotally to at least one link mount (122) being connected to the ground link. The brake mount (20) is mounted adjacent to a non-drive side dropout (111) and has a caliper (A) mounted thereon. The connecting shaft (30) is connected to the ground link and the brake mount (20).

## Description

### 1. Field of the Invention

The present invention relates to a rear fork for a rear suspension bicycle, and more particularly to a rear fork with optimum braking and suspension.

### 2. Description of Related Art

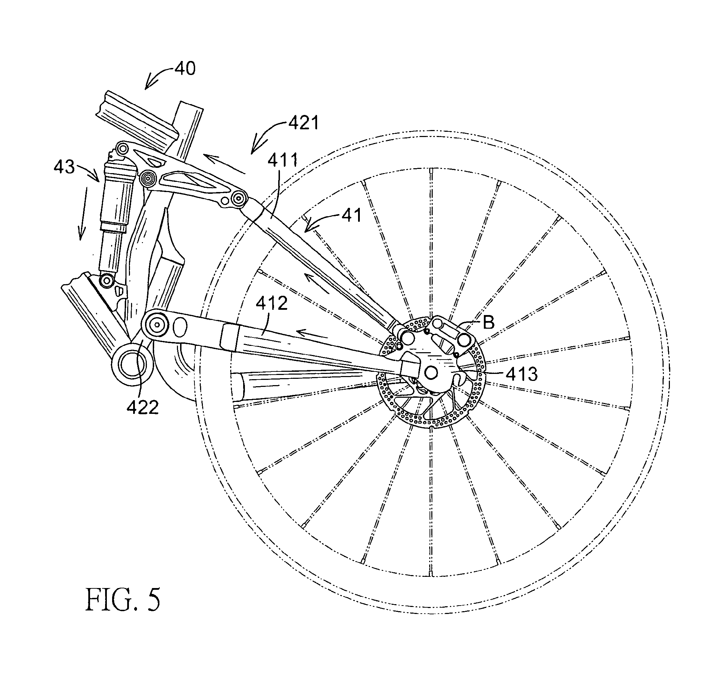

With reference to Fig. 5, a conventional rear fork (41) is mounted on a rear suspension bicycle having a front frame (40) and a rear wheel. The front frame (40) has a ground link with a bottom bracket end and a seat end. The rear wheel is connected to the front frame (40) and has a hub, a rear axle and a brake disc. The rear axle is mounted rotatably through the hub. The brake disc is mounted securely on the hub.

The rear fork (41) has a drive side, a non-drive side, two input links (421), a shock absorber (43), two coupler links (411) and two follower links (412). The input links (421) are connected pivotally to the grounded link of the front frame (40) at the seat end and have shock ends and coupler ends. The shock absorber (43) is telescopically extensible and mounted pivotally on the shock ends of the input links (421) and to the ground link at the bottom bracket end.

The coupler links (411) are connected pivotally to the coupler ends of the input links (421) and have wheel ends and dropouts (413) respectively mounted securely on the wheel ends. The dropouts (413) are mounted rotatably around the rear axle and have a caliper (B) mounted securely on the dropout (413) mounted on the non-drive side of the rear fork (41) corresponding to the brake disc to selectively apply a braking force to the rear wheel.

The follower links (412) are respectively connected securely to the drop outs (413) and have bottom bracket ends being connected pivotally to at least one link mount (422). Each link mount (422) is securely mounted on the grounded link at the bottom bracket end.

When the caliper (B) is applied, the braking force stops the wheel, but transfers the braking force to the shock absorber (43) through the coupler and input links (411, 421), and causes the rear wheel to move relative to the front frame (40) and reducing an amount of suspension travel. Therefore, since the suspension and brakes are most frequently required to operate at a peak together, for instance, while cornering, riding rough terrain or before a crash when a rider loses control, the conventional rear suspension fork reduces an effectiveness of both suspension and braking, causing more severe accidents, reduced cornering performance and reduced rider comfort.

Furthermore, the braking force causes a compression force in the rear fork (41), so a strength of the rear frame (41) to bear the compression force is required. Therefore, a structure of the rear fork (41) cannot be changed to reduce weight of the conventional rear fork.

To overcome the shortcomings, the present invention provides a rear fork to mitigate or obviate the aforementioned problems.

The main objective of the present invention is to provide a rear fork for a rear suspension bicycle , which has optimum braking and suspension.

The rear fork in accordance with the present invention has input links, a shock absorber, coupler links, follower links, a brake mount and a connecting shaft. The input links are mounted pivotally on the ground link and are connected to the shock absorber that is mounted pivotally on the ground link. The coupler links are connected rotatably to the input links and terminate in dropouts being rotatably mounted thereon. The follower links are mounted rotatably on the dropouts and pivotally to at least one link mount being connected to the ground link. The brake mount is rotatably mounted adjacent to a non-drive side dropout and has a caliper mounted thereon. The connecting shaft is connected to the ground link and the brake mount to prevent a shock absorbing force of the rear fork from interfering with a braking force of the caliper.

Other objectives, advantages and novel features of the invention will become more apparent from the following detailed description when taken in conjunction with the accompanying drawings.

**IN THE DRAWINGS:**
Fig. 1 is a side view of a rear fork in accordance with the present invention for a rear suspension bicycle;
Fig. 2 is a perspective view of the rear fork for the rear suspension bicycle in Fig. 1;
Fig. 3 is an exploded perspective view of the rear fork for the rear suspension bicycle in Fig. 1;
Fig. 3A is an enlarged perspective view of a dropout of the rear fork for the rear suspension bicycle in Fig. 3;
Fig. 4 is an enlarged operational side view of the rear fork for the rear suspension bicycle in Fig. 1; and
Fig. 5 is a side view of a rear fork for the rear suspension bicycle in accordance with the prior art.

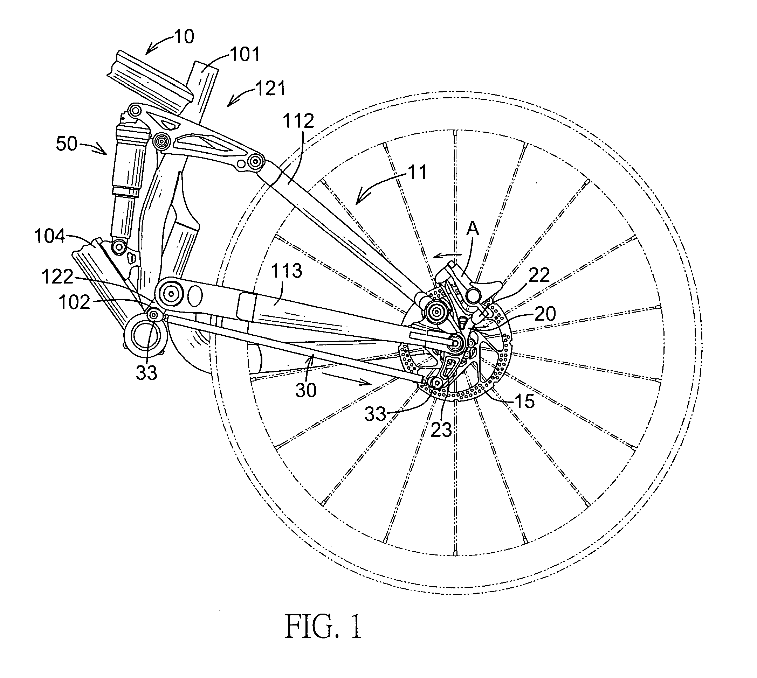

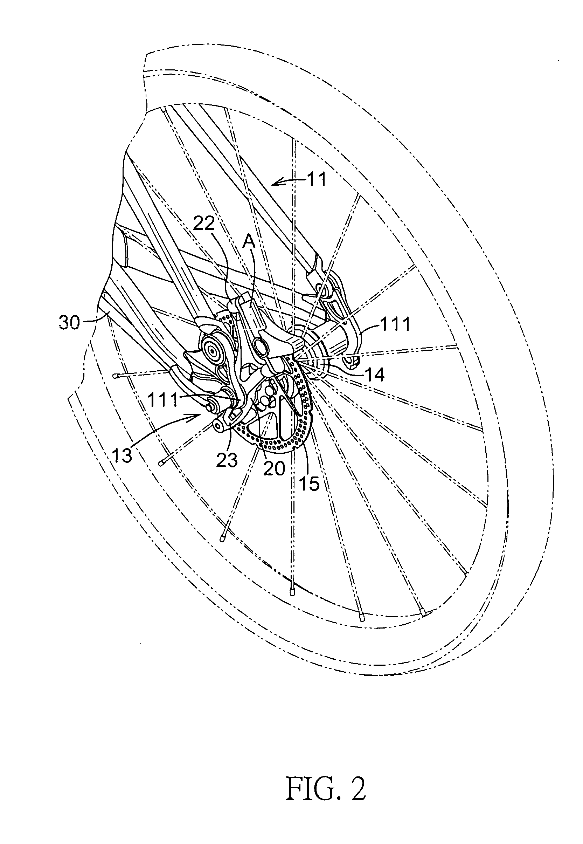

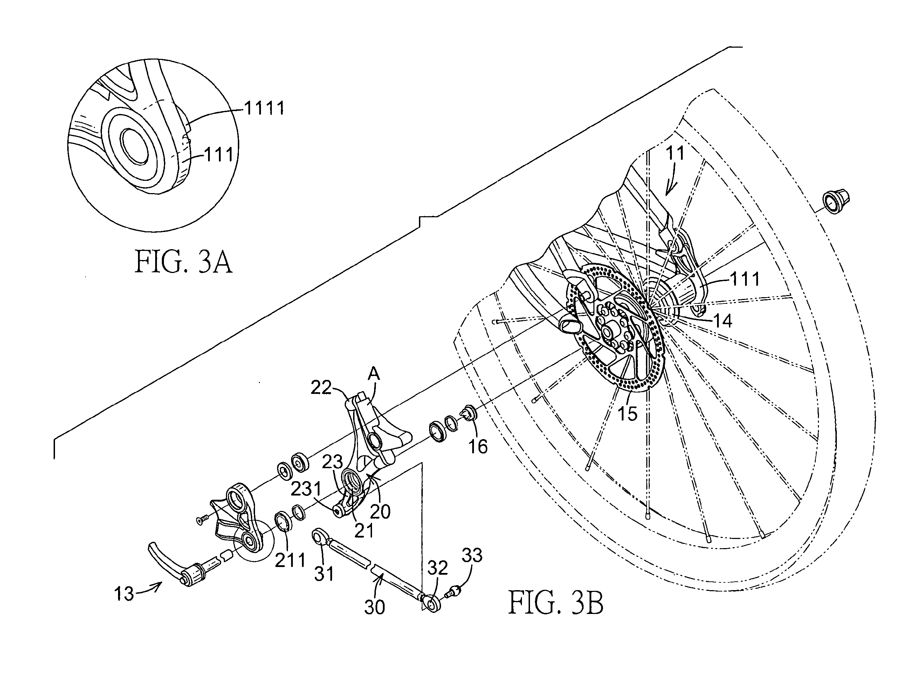

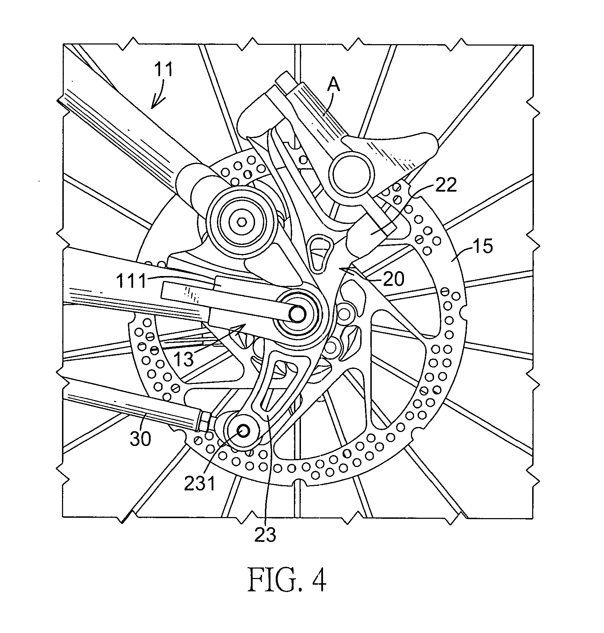

With reference to Figs. 1 to 4, a rear fork (11) in accordance with the present invention for a rear suspension bicycle having a front frame (10) and a rear wheel, and the rear fork (11) has a drive side, a non-drive side, two input links (121), a shock absorber (50), two coupler links (112), two follower links (113), a brake mount (20) and a connecting shaft (30).

The front frame (10) has a ground link with a bottom bracket end, a seat end and multiple mounts. The ground link of the front frame (10) may be a down tube (104) and at least one seat tube (101) being connected securely at the bottom bracket end. One mount may be a seat mount formed adjacent to the seat end on the seat tube (101). One mount may be a bottom bracket mount formed at the bottom bracket end and mounted on the down tube (104), the seat tube (101) or mounted on the down tube (104) and the seat tube (101).

The rear wheel has a hub (14), a rear axle (13) and a brake disc (15). The rear axle (13) is mounted rotatably through the hub (14). The brake disc (15) is mounted securely on the hub (14).

The input links (121) are mounted pivotally on the ground link at the seat end, may be mounted pivotally on the seat mount, and each input link (121) has a shock end and a coupler end.

The shock absorber (50) is telescopically extensible and mounted pivotally on the shock ends of the input links (121) and the ground link at the bottom bracket end and may be mounted pivotally on the bottom bracket mount.

The coupler links (112) are connected pivotally to the coupler ends of the input links (121) and the coupler links (112) have wheel ends and dropouts (111) respectively mounted pivotally on the wheel ends.

The dropouts (111) are mounted rotatably around the rear axle (13) and each dropout (111) has an inner side, a mounting jacket (1111) and an inner bearing (16). The mounting jacket (1111) is formed on and protrudes from the inner side of the dropout (111). The inner bearing (16) is mounted around the rear axle (13) between the mounting jacket (1111) and the hub (14).

The rear axle (13) is detachably connected to the dropouts (111) by a fastener and has two ends. The fastener may be a quick release fastener. The ends of the rear axle (13) are respectively mounted through the inner bearings (16) and the mounting jackets (1111) of the dropouts (111).

The follower links (113) are respectively connected pivotally to the dropouts (111) and have bottom bracket ends being connected to the ground link by at least one link mount (122). The link mount (122) may have a mounting protrusion (102) being formed on and protruding from a non-drive side of a corresponding follower link (113).

The brake mount (20) is rotatably mounted around the rear axle (13) on the non-drive side of the rear fork (11) between the brake disc (15) and a corresponding dropout (111) and has a bearing mount (21), an outer bearing (211), a brake arm (22), a connection arm (23) and a caliper (A). The bearing mount (21) is formed centrally through the brake mount (20). The outer bearing (211) is mounted in the bearing mount (21) and is mounted around the rear axle (13) between the mounting jacket (1111) and the inner bearing (16) of the corresponding dropout (111). The brake arm (22) is formed on and protrudes above the bearing mount (21) of the brake mount (20) and the brake arm (22) may be have a length as long as a radius of the brake disc (15). The connection arm (23) is formed on and protrudes below the bearing mount (21) of the brake mount (20), has a distal end and an optional threaded hole (231) and may be have a length as long as the radius of the brake disc (15). The threaded hole (231) is formed through the distal end of the connection arm (23). The caliper (A) is mounted on the brake arm (22) of the brake mount (20) to engage a periphery of the brake disc (15).

The connecting shaft (30) is connected pivotally to the the connection arm (23) of the brake mount (20) and the link mount (122) and has a wheel end, a bottom bracket end, a bottom bracket hole (31), a wheel hole (32) and two fasteners (33). The bottom bracket end of the connecting shaft (30) is connected to the front frame (10) and may be using a corresponding link mount (122). The wheel end of the connecting shaft (30) is connected to the connecting arm (23) of the brake mount (20). The bottom bracket hole (31) is formed through the bottom bracket end of the connecting shaft (30) and is mounted around the mounting protrusion (102) of the link mount (122). The wheel hole (32) is formed through the wheel end of the connecting shaft (30) and aligns with the threaded hole (231) of the connection arm (23). The fasteners (33) are respectively mounted securely on the mounting protrusion (102) and in the threaded hole (231) to hold the connecting shaft (30) between the at least one link mount (122) and the brake mount (20).

When the rear fork (11) moves up or down relative to the front frame (10), the brake mount (20) will move with the corresponding coupler link (112) and the corresponding follower link (113), and the caliper (A) will move around the brake disc (15). As the brake mount (20) moves with the rear fork (11), the connecting shaft (30) will be pulled or pressed by the connection arm (23) of the brake mount (20).

When the caliper (A) engages the brake disc (15) and generates a forward braking force to the brake arm (22), and the connecting arm (23) of the brake mount (20) will pull the connecting shaft (30) and the braking force is transferred to the front frame (10) through the connecting shaft (30) instead of through the shock absorber (50). Therefore, the shock absorber (50) does not interfere with the braking force of the caliper (A) and can provide optimum braking and suspension effect of the rear fork.

Furthermore, the braking force of the caliper (A) will not form a pressing component force in the rear frame (11), and the designer need not consider compression strength of the rear fork (11) so a structure of the rear fork (11) may be altered or reduced for additional benefit. In addition, the rear axle (13) is detachably connected to the dropouts (111) by a quick release element and the brake mount (20) is mounted around the mounting jacket (1111) of the corresponding dropout (111) so the hub (14) can be maintained easily and conveniently.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A rear fork (11) for a rear suspension bicycle having a front frame (10) comprising a ground link having multiple mounts being formed at a bottom bracket end and a seat end, a rear wheel having a hub (14), a rear axle (13) being mounted rotatably through the hub (14) and a brake disc (15) being mounted securely on the hub (14), and the rear fork (11) having
a drive side;
a non-drive side;
two input links (121) being adapted to mount pivotally on the ground link and each input link (121) having a shock end and a coupler end;
a shock absorber (50) being telescopically extensible and being mounted pivotally on the shock ends of the input links (121) to mount on the ground link at the bottom bracket end;
two coupler links (112) being connected pivotally to the coupler ends of the input links (121) and the coupler links (112) having
wheel ends; and
dropouts (111) being respectively mounted pivotally on the wheel ends to mount rotatably around the rear axle (13);
two follower links (113) being respectively connected pivotally to the dropouts (111) and having bottom bracket ends being adapted to connect to the ground link by at least one link mount (122);
a brake mount (20) being adapted to rotatably mount around the rear axle (13) on the non-drive side of the rear fork (11) between the brake disc (15) and a corresponding one of the dropouts (111) and having
a bearing mount (21) being formed centrally through the brake mount (20);
a brake arm (22) being formed on and protruding above the bearing mount (21); and
a connection arm (23) being formed on and protruding below the bearing mount (21) and having a distal end; and
a caliper (A) being mounted on the brake arm (22) of the brake mount (20) to engage a periphery of the brake disc (15); and
a connecting shaft (30) being connected pivotally to the at least one link mount (122) and the connection arm (23) of the brake mount (20).

2. The rear fork as claimed in claim 1, wherein
each dropout (111) has
an inner side;
a mounting jacket (1111) being formed on and protruding from the inner side of the dropout (111); and
an inner bearing (16) being mounted in the mountingjacket (1111) of the dropout (111);
wherein the inner bearings (16) and the mounting jackets (1111) of the dropouts (111) are adapted to mount rotatably around the rear axle (13).

3. The rear fork as claimed in claim 2, wherein
the brake mount (20) further has an outer bearing (211) being mounted in the bearing mount (21) and being adapted to mount around the rear axle (13) between the mounting jacket (1111) of a corresponding dropout (111) and the inner bearing (16);
the brake arm (22) has a length as long as a radius of the brake disc (15); and
the connection arm (23) has a length as long as the radius of the brake disc (15).

4. The rear fork as claimed in claim 3, wherein
each one of the at least one link mount (122) further has a mounting protrusion (102) being formed on and protruding from a non-drive side of a corresponding follower link (113);
the connection arm (23) further has a threaded hole (231) formed through the distal end of the connection arm (23); and
the connecting shaft (30) further has
a bottom bracket end being connected to the mounting protrusion (102) of a corresponding link mount (122);
a wheel end being connected to the connection arm (23) of the brake mount (20);
a bottom bracket hole (31) being formed through the bottom bracket end of the connecting shaft (30) and being mounted around the mounting protrusion (102) of a corresponding one of the at least one link mount (122);
a wheel hole (32) being formed through the wheel end of the connecting shaft (30) and aligning with the threaded hole (231) of the connection arm (23); and
two fasteners (33) being respectively mounted securely on the mounting protrusion (102) and in the threaded hole (231) to hold the connecting shaft (30) between the at least one link mount (122) and the brake mount (20).

5. The rear fork as claimed in claim 4, wherein the rear fork (11) further has a quick release fastener being adapted to connect the rear axle (13) detachably with the dropouts (111).

6. The rear fork as claimed in claim 1, wherein the rear fork (11) further has a quick release fastener being adapted to connect the rear axle (13) detachably with the dropouts (111).
